# EUROPEAN PATENT SPECIFICATION

(11) **EP 4 593 364 B1**
(45) Date of publication and mention of the grant of the patent: **05.08.2026**
(21) Application number: 25153383.2
(22) Date of filing: 22.01.2025
(51) Int. Cl.: H04N 1/00, G06F 3/12

(54) **IMAGE FORMING APPARATUS**
BILDERZEUGUNGSGERÄT
APPAREIL DE FORMATION D'IMAGES

(30) Priority: 25.01.2024 JP 2024009795
(43) Date of publication of application: 30.07.2025
(73) Proprietor: Kyocera Document Solutions Inc., Osaka-shi, Osaka 540-8585 (JP)
(72) Inventor: Raganas, Kenneth, Osaka, 540-8585 (JP); Lauron, Louella, Osaka, 540-8585 (JP); Yap, Shanice, Osaka, 540-8585 (JP); Olan, Celine Louise, Osaka, 540-8585 (JP); Castilla, James Marie, Osaka, 540-8585 (JP)
(74) Representative: BRP Renaud & Partner mbB Rechtsanwälte Patentanwälte Steuerberater

(56) References cited:
- US-A1- 2007 050 727
- US-A1- 2010 180 164

## Description

### BACKGROUND

The present disclosure relates to image forming apparatuses capable of printing an image on a sheet.

Recently, many techniques for the purpose of increasing the operability of an image forming apparatus or for the purpose of reducing the effort involved in user's operation on an image forming apparatus have been developed. For example, there is known an image forming apparatus in which scanned data is stored and then efficiently used.

Patent document US2010180164 discloses an information processing apparatus for managing document files, has display control unit that changes icon display state of document file including file identifier and job ID from normal display state to error display state.

Patent document US2007050727 discloses a computer implemented contextual desktop method for graphic user interface, involves managing current contextual desktop folders where default file operations of application program are directed to current contextual desktop folder.

### SUMMARY

A technique improved over the aforementioned techniques is proposed as one aspect of the present disclosure.

An image forming apparatus according to an aspect of the present disclosure includes a storage device, an input acceptance device, an image reading device, an image forming device, a shortcut creator and a controller. The storage device stores a folder where data is contained. The input acceptance device accepts an input of an instruction from a user. The image reading device reads an image of an original document and acquires image data representing the image. The image forming device prints an image on a sheet based on print data. The shortcut creator creates, in accordance with the input of the instruction accepted by the input acceptance device, a shortcut for the folder where the image data acquired by the image reading device is to be contained and a shortcut for the folder where the print data printed by the image forming device is to be contained. The controller allows the image data acquired by the image reading device and the print data printed by the image forming device to be contained in the folder represented by the shortcut in accordance with an instruction to specify the shortcut accepted by the input acceptance device.

### BRIEF DESCRIPTION OF THE DRAWINGS

FIG. 1 is a block diagram showing an electric configuration of an image forming apparatus.
FIG. 2 is a diagram showing an example of a data structure in a storage device.
FIG. 3A is a flowchart showing processing for creating a shortcut for a folder where image data acquired by scanning is to be contained.
FIG. 3B is a view showing an example of a home screen of an image forming apparatus 1.
FIG. 4 is a view showing an example of a screen displayed on a display device.
FIG. 5 is a view showing another example of a screen displayed on the display device.
FIG. 6 is a view showing still another example of a screen displayed on the display device.
FIG. 7 is a view showing still another example of a screen displayed on the display device.
FIG. 8 is a view showing still another example of a screen displayed on the display device.
FIG. 9 is a view showing still another example of a screen displayed on the display device.
FIG. 10 is a view showing still another example of a screen displayed on the display device.
FIG. 11A is a flowchart showing processing for setting a folder where, after printing of print data, the print data is to be contained.
FIG. 11B is a view showing still another example of a screen displayed on the display device.
FIG. 12 is a view showing still another example of a screen displayed on the display device.
FIG. 13 is a view showing still another example of a screen displayed on the display device.
FIG. 14 is a view showing still another example of a screen displayed on the display device.
FIG. 15 is a view showing still another example of a screen displayed on the display device.
FIG. 16 is a view showing still another example of a screen displayed on the display device.

### DETAILED DESCRIPTION

Hereinafter, a description will be given of an image forming apparatus according to embodiments of the present disclosure with reference to the drawings. An image forming apparatus according to these embodiments is a printer, a copier, a scanner, a multifunction peripheral having the functions of these devices, or other image forming apparatuses using an electrophotographic system. However, the present disclosure is also applicable to image forming apparatuses adopting image formation systems (for example, an ink-jet system) other than the electrophotographic system.

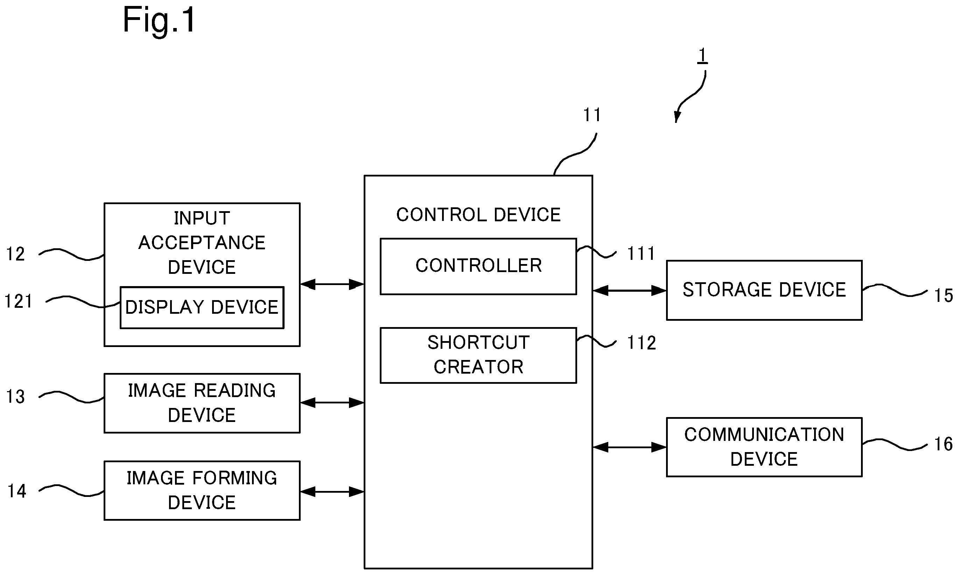

FIG. 1 is a block diagram showing an electric configuration of an image forming apparatus according to one embodiment of the present disclosure. The image forming apparatus 1 is formed by including a control device 11, an input acceptance device 12, an image reading device 13, an image forming device 14, a storage device 15, a communication device 16, and so on. The input acceptance device 12 includes hard keys, such as a decision key for giving a definite instruction for various operations and settings and a start key, and a display device 121. The display device 121 displays an operation screen, a message, and so on. The display device 121 may be formed integrally with a touch panel. The display device 121 is composed of a liquid crystal display (LCD), an organic EL (an organic light-emitting diode (OLED)) display or other types of display.

The image reading device 13 includes a scanner, reads an image of an original document, and acquires image data representing the image. The image forming device 14 is, for example, an image formation mechanism of an electrophotographic system and prints, on a sheet, image data acquired by the image reading device 13, image data received by the communication device 16 from an external device or other image data. The image forming device 14 includes a developing device (not shown) that forms a toner image on a sheet, a fixing device (not shown), and so on. After the developing device forms a toner image on a surface of a sheet, the sheet is conveyed to the fixing device. When a pressure roller and a heat roller of the fixing device conveys the sheet while pinching it, toner attached to the surface of the sheet by electrostatic force is adhesively fixed to the sheet.

The storage device 15 is a large-capacity storage device composed of an SSD (solid state drive) or an HDD (hard disk drive) that store image data, various programs, data tables, and so on.

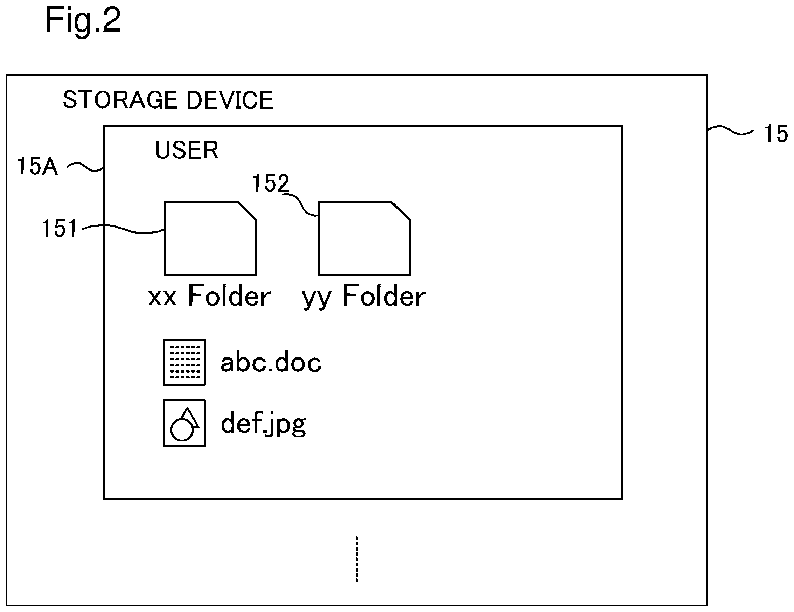

FIG. 2 is a diagram showing an example of a data structure of sets of data stored in the storage device 15. The storage device 15 stores, in addition to various types of data (not shown) necessary for the operation of the image forming apparatus 1, user folders 15A assigned to individual users, individual groups, and so on. Each user folder 15A stores print data, image data, folders, and so on.

The user folder 15A stores folders, such as an xx folder 151 and a yy folder 152, document data (abc.doc), image data (def.jpg), and so on. The folder further contains various document data and various image data.

Referring back to FIG. 1, the communication device 16 is composed of a communication module or the like and transfers various data to and from external devices via networks.

The control device 11 is composed of a processor, a RAM (random access memory), a ROM (read only memory), and so on. The processor is, for example, a CPU (central processing unit), an MPU (micro processing unit) or an ASIC (application specific integrated circuit).

When the processor executes a control program stored in the ROM or the like, the control device 11 functions as a controller 111 or a shortcut creator 112. The controller 111 governs the overall operation control of the image forming apparatus 1. The shortcut creator 112 creates a shortcut for a folder in accordance with an instruction input by a user. Each of the components of the control device 111 may not be implemented by the operation based on the control program, but may instead be configured by a hardware circuit.

Next, a description will be given of processing for creating a shortcut in this embodiment.

### <Embodiment 1>

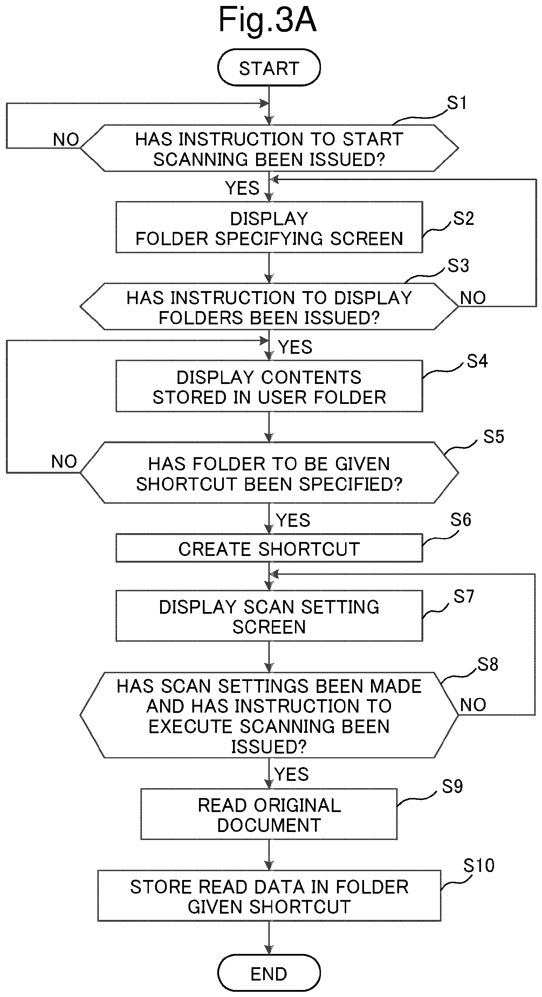

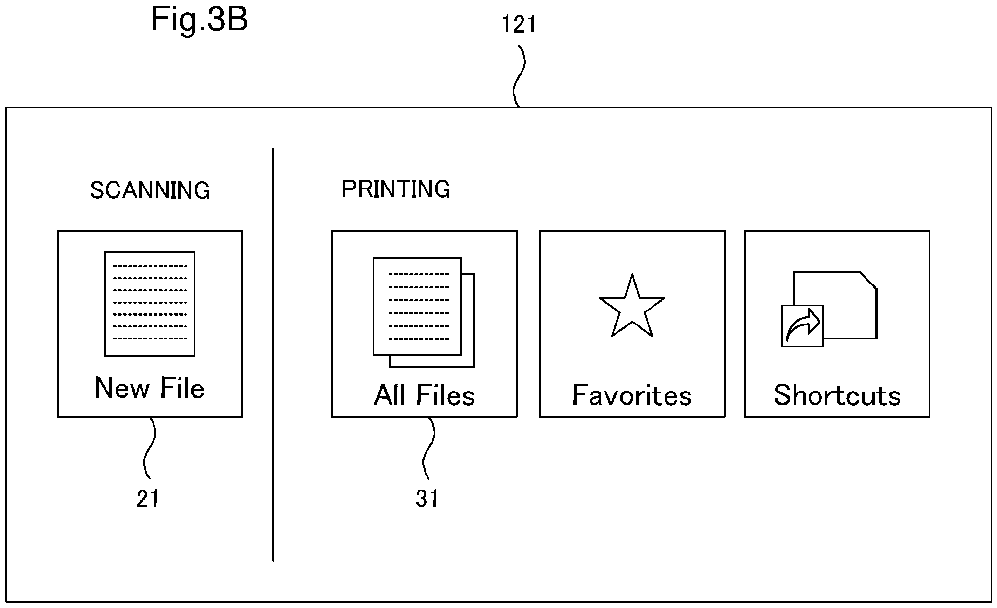

First, a description will be given of the case of creating a shortcut for a folder where image data acquired by scanning is to be contained. FIG. 3A is a flowchart showing processing for creating a shortcut for a folder where image data acquired by scanning is to be contained. FIG. 3B is a view showing an example of a home screen of the image forming apparatus 1.

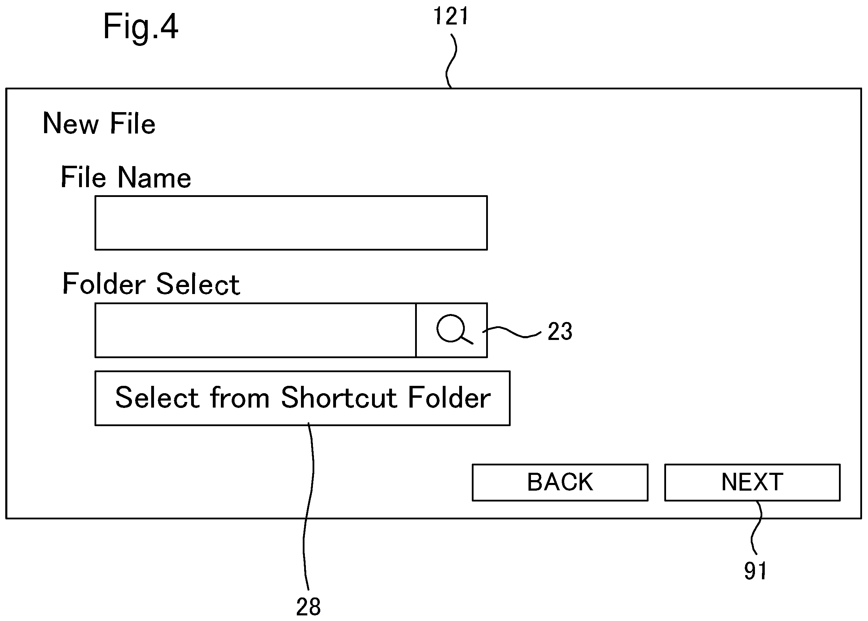

In scanning an original document, the user makes a touch gesture on a button 21 while the above-described home screen is displayed under control of the controller 111. When in response to this touch gesture an instruction to start scanning is accepted by the input acceptance device 12 (YES in S1), the controller 111 allows the display device 121 to display a folder specifying screen shown in FIG. 4 (S2). FIG. 4 is an example of a folder specifying screen for use to specify: a file name of scanned image data; and a folder where the image data is to be contained.

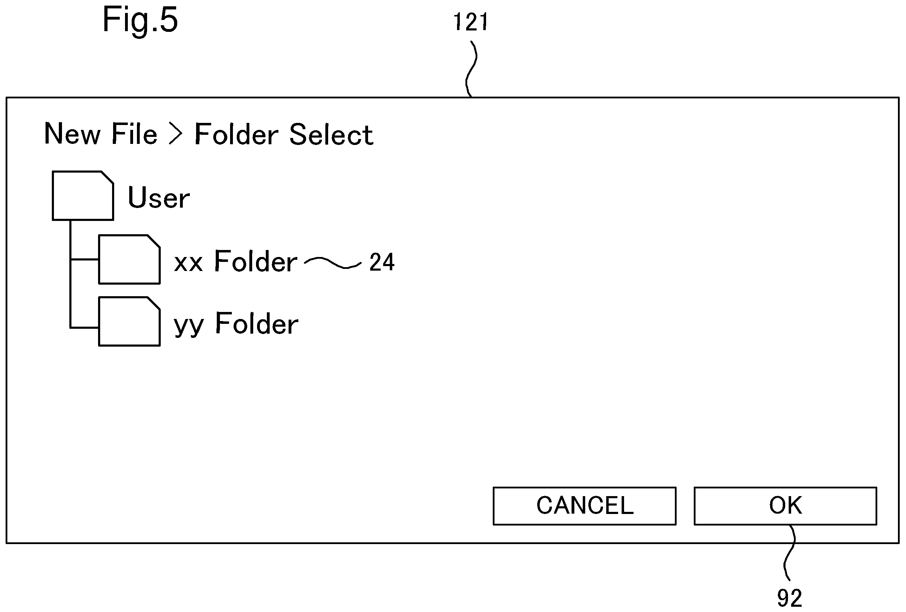

When the user wants to create a shortcut for the folder, the user makes a touch gesture on a magnifying glass button 23. When in response to this touch gesture an instruction to display folders is accepted by the input acceptance device 12 (YES in S3), the controller 111 allows the display device 121 to display a display screen showing folders and files contained in the user folder 15A of the storage device 15 (S4). FIG. 5 is a view showing an example of the display screen displayed after a touch gesture on the magnifying glass button 23.

Assume that, at this time, the user folder 15A previously stores an xx folder and a yy folder. Thus, as shown in FIG. 2, the controller 111 allows the display device 121 to display these two folders on the display screen. At this point in time, a shortcut is not yet created. Therefore, the controller 111 does not allow a shortcut folder 153 to be displayed.

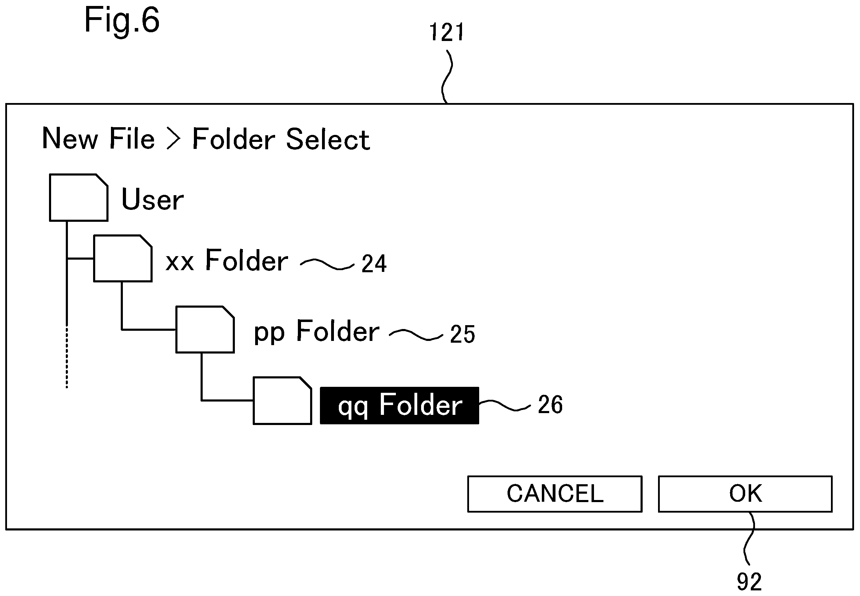

When the user makes a touch gesture on the xx folder 24 on the display screen shown in FIG. 5, the controller 111 expands, in accordance with an instruction input in response to this touch gesture, the xx folder 24 to see all subfolders of the xx folder 24 (see FIG. 6). FIG. 6 is a view showing an example of a display screen showing subfolders of the xx folder 24. Here, assume that the user makes a touch gesture on a qq folder 26 being a subfolder of the xx folder 24 to select it as being subject to creation of a shortcut and subsequently makes a touch gesture on an OK button 92 (YES in S5).

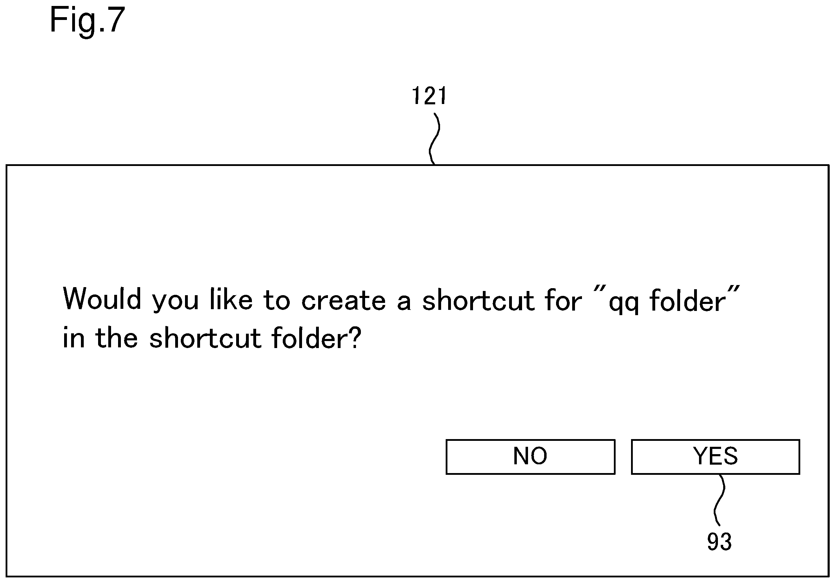

At this time, in accordance with an instruction to create a shortcut accepted by the input acceptance device 12 in response to the above touch gesture, the controller 111 allows the display device 121 to display a display screen shown in FIG. 7. This display screen is a display screen showing a message for confirming that a shortcut for the qq folder for use in storing image data to be acquired by subsequent scanning is created.

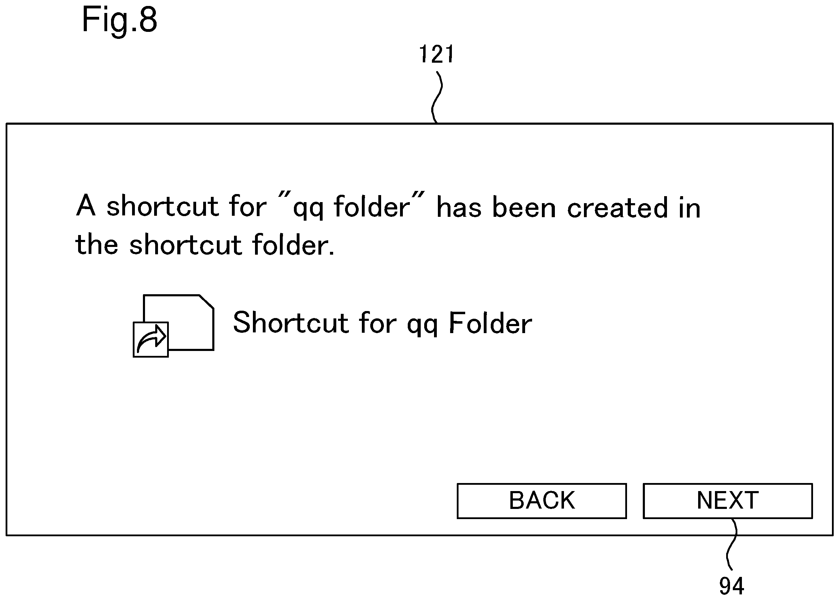

When the user makes a touch gesture on a YES button 93 on the display screen shown in FIG. 7 and a definite instruction to create a shortcut is thus accepted by the input acceptance device 12, the shortcut creator 112 creates in the storage device 15 a shortcut folder 153 and a shortcut for the qq folder and allows the shortcut for the qq folder to be stored in the shortcut folder 153 (S6). Thereafter, the controller 111 allows the display device 121 to display a display screen shown in FIG. 8. The controller 111 sets the folder (the qq folder in this example) associated with the shortcut not only as a folder to be preferentially displayed with less operation effort for selection of a print target by the image forming device 14, but also as a folder where image data acquired by the image reading device 13 and print data printed by the image forming device 14 are to be stored. Thus, for example, even in the case where image data to be acquired by subsequent scanning is contained into a deep subfolder, the folder can be easily called up.

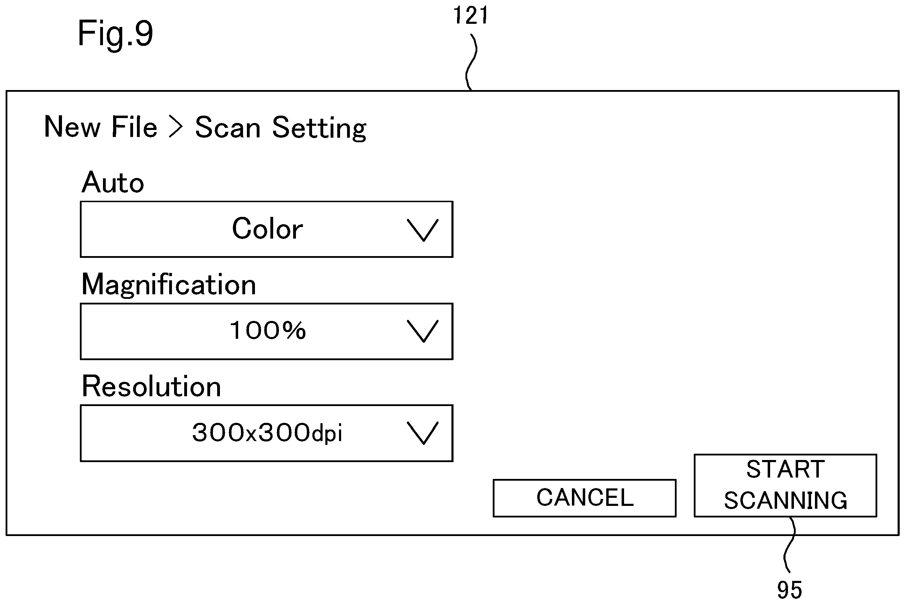

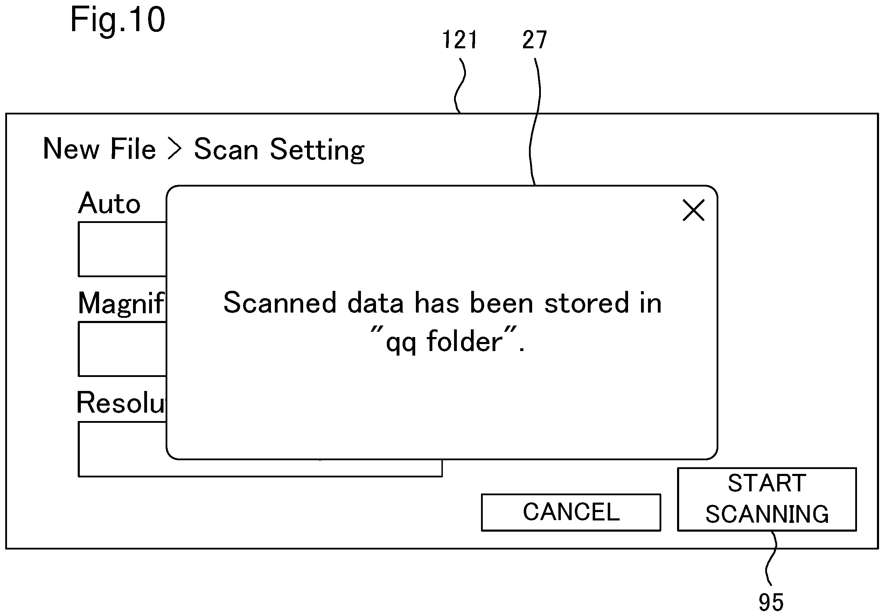

When the user makes a touch gesture on a button 94 shown in FIG. 8 and an instruction to switch the screen is thus accepted by the input acceptance device 12, the controller 111 allows the display device 121 to display a scan setting screen as shown in FIG. 9 (S7). Then, when the user makes touch gestures on individual buttons shown on the scan setting screen and various settings are thus accepted by the input acceptance device 12, and the user further makes a touch gesture on a START SCANNING button 95 and an instruction to execute scanning is thus accepted by the input acceptance device 12 (YES in S8), the controller 111 allows the image reading device 13 to read an original document and thus acquires image data representing an image of the original document (S9). After acquiring the image data, the controller 111 allows the image data to be contained in the qq folder (S10) and allows the display device 121 to display a display screen shown in FIG. 10. On the display screen, a message 27 indicating that the acquired image data has been contained in the qq folder is displayed.

In this embodiment, prior to execution of scanning, a shortcut for a folder serving as a destination to contain image data read by the scanning can be easily created. Therefore, user's effort taken to set the destination to contain image data can be reduced.

Thereafter, in scanning an original document, when an instruction to start scanning is accepted by the input acceptance device 12 in response to a touch gesture on the button 21 on the home screen (YES in S1), the controller 111 thus allows the display device 121 to display the folder specifying screen shown in FIG. 4 (S2). When at this time the user makes a touch gesture on a "Select from Shortcut Folder" button 28 and an instruction to display the contents of the shortcut folder 153 is thus accepted by the input acceptance device 12, the controller 111 allows the display device 121 to display, not the display screen shown in FIG. 5, but a display screen showing the contents (the created shortcut) stored in the shortcut folder 153. When at this time an instruction to specify the shortcut is accepted by the input acceptance device 12 in response to a user's gesture, the controller 111 allows image data acquired by scanning to be stored in the folder represented by the shortcut specified by the instruction to specify the shortcut. In this manner, the user can easily specify, on the display screen, even a folder located deep in a data storage hierarchy as a destination to contain image data acquired by scanning.

### <Embodiment 2>

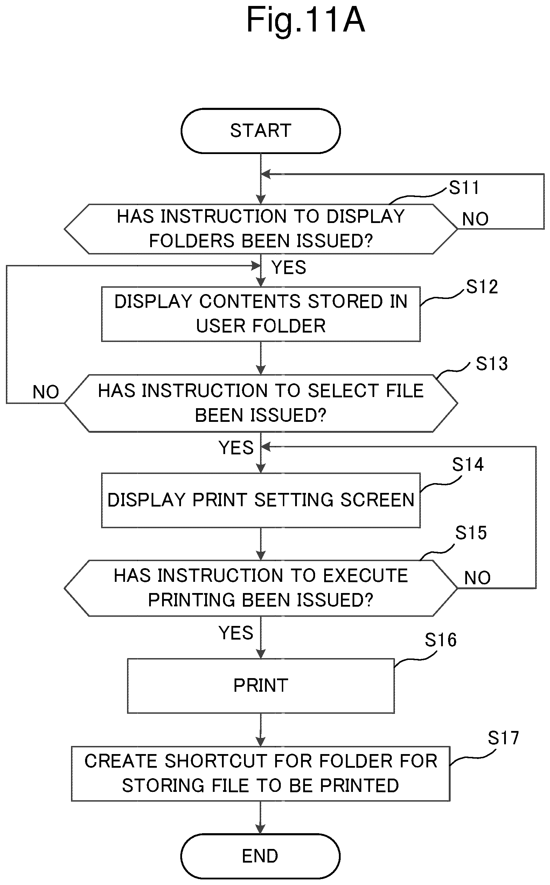

Next, a description will be given of processing for setting a folder where, after printing of print data, the print data is to be contained. FIG. 11A is a flowchart showing processing for setting a folder where, after printing of print data, the print data is to be contained. Assume that, on the display screen shown in FIG. 3B, the user makes a touch gesture on, for example, a button 31. When in response to this touch gesture an instruction to display folders is accepted by the input acceptance device 12 (YES in S11), the controller 111 allows the display device 121 to display a display screen showing folders and files contained in the user folder 15A of the storage device 15 (S12).

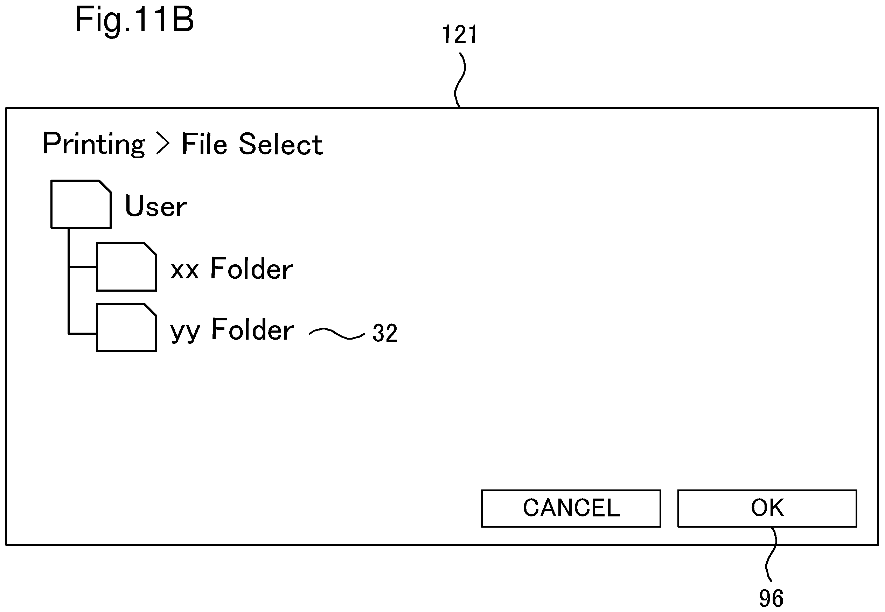

FIG. 11B is a view showing an example of a display screen showing folders and files contained in the user folder 15A. When the user makes a touch gesture on, for example, a yy folder 32 on the display screen shown in FIG. 11B, the controller 111 expands, in accordance with an instruction input in response to this touch gesture, the yy folder 32 to see all subfolders of the yy folder 32.

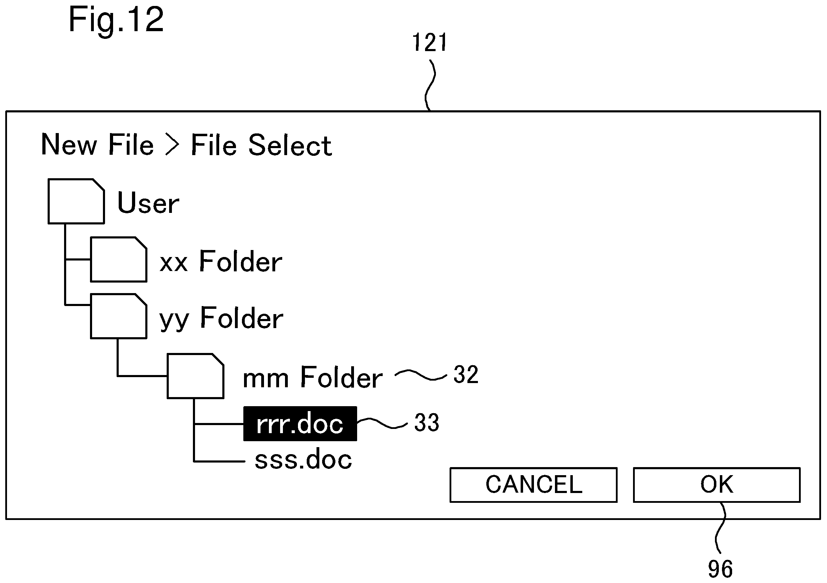

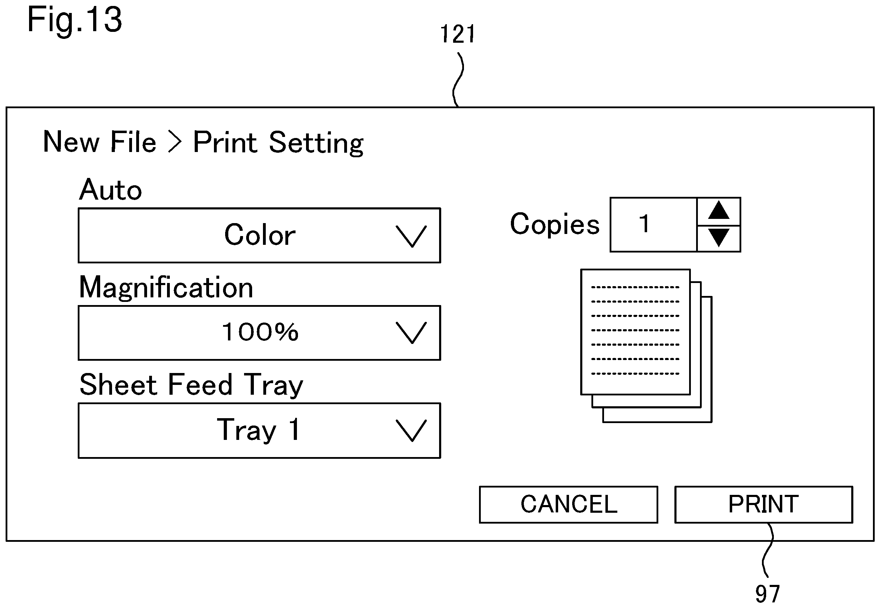

FIG. 12 is a view showing an example of a display screen showing a subfolder of the yy folder 32. Assume that, on the display screen shown in FIG. 12, the user makes a touch gesture for selecting an mm folder 32 and a file name "rrr.doc" 33 and further makes a touch gesture on an OK button 96. When in response to this touch gesture an instruction to select a file is accepted by the input acceptance device 12 (YES in S13), the controller 111 allows the display device 121 to display a print setting screen as shown in FIG. 13 (S14). When various print settings are input to the input acceptance device 12 according to operations on buttons shown on the print setting screen and an instruction to execute printing is accepted by the input acceptance device 12 in response to a user's touch gesture on a PRINT button 97 (YES in S15), the controller 111 allows the image forming device 14 to print the selected print data (rrr.doc) (S16). As just described, when print data is selected, the controller 111 immediately allows the display device 121 to display the print setting screen. Thus, the user does not need to perform, separately from an operation for selecting the print data, an operation for allowing the print setting screen to be displayed, which reduces the effort taken to make print settings in printing print data.

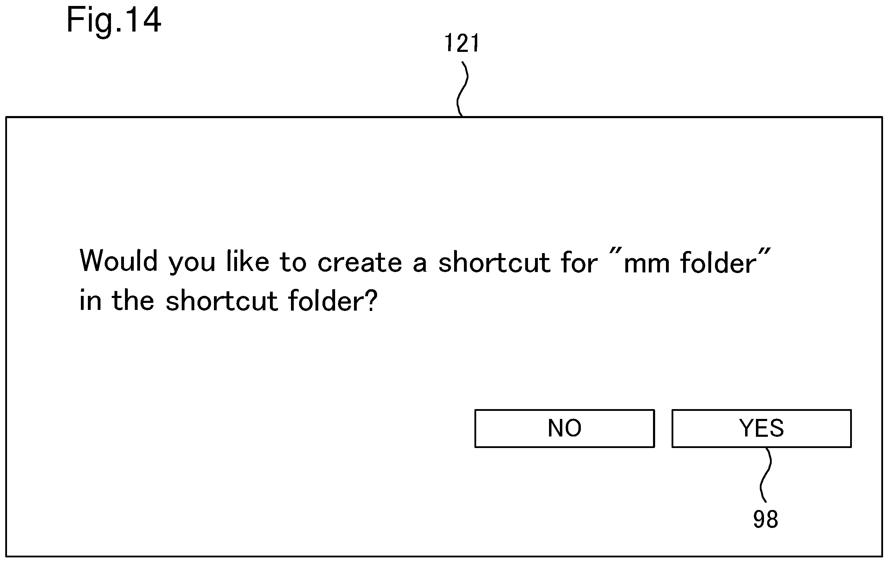

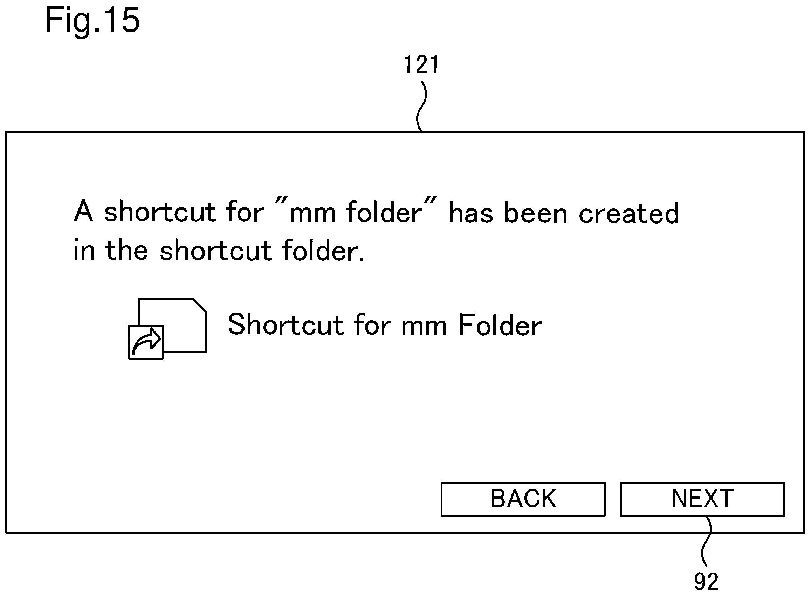

After the printing, the controller 111 allows the display device 121 to display a message for confirming that a shortcut for the mm folder 32 where the print data has been contained is created. FIG. 14 is a view showing an example of a display screen after the image forming device 14 executes printing. When the user makes a touch gesture on a YES button 98 on the display screen shown in FIG. 14 and an instruction to create a shortcut is thus accepted by the input acceptance device 12, the shortcut creator 112 creates, in relation to the folder (the mm folder 32 in this example) which has been selected in S13 together with the file "rrr.doc" 33 selected as a print target and contains the file "rrr.doc" 33, a shortcut folder 153 and a shortcut for the mm folder 32 and the controller 111 allows the shortcut for the mm folder 32 to be stored in the shortcut folder 153 (S17). Then, the controller 111 allows the display device 121 to display a display screen shown in FIG. 15.

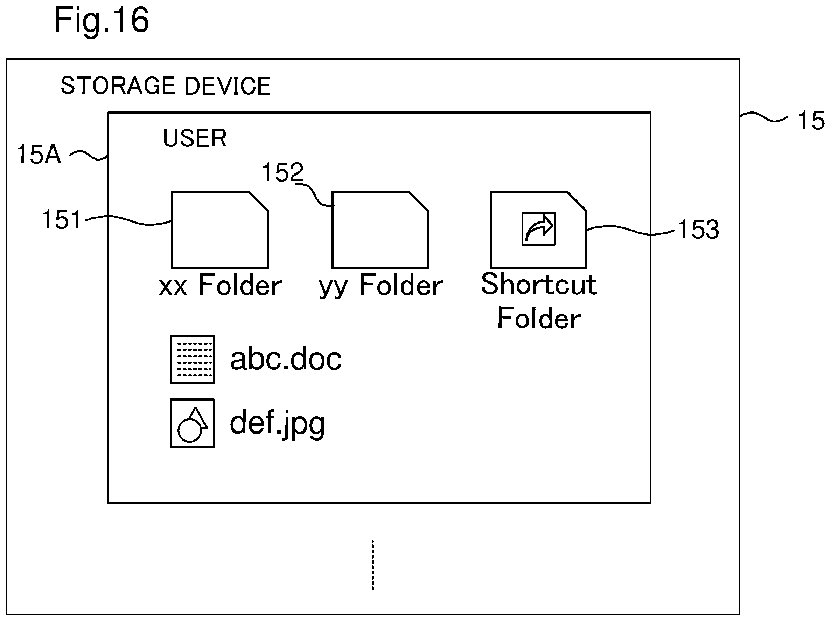

Furthermore, in Embodiments 1 and 2, in the case where, after a shortcut is stored as described above, an instruction to display folders is input to the input acceptance device 12 and the controller 111 allows the display device 121 to display a display screen showing folders and files contained in the user folder 15A, the controller 111 allows the shortcut folder 153, if it has already been created, to be displayed on the display screen as shown as an example in FIG. 16. For example, when an instruction to display folders is accepted by the input acceptance device 12, the controller 111 allows the display device 121 to display the shortcut folder 153 that stores shortcuts, so long as the shortcut folder 153 exists in the user folder 15A of the storage device 15. Then, when the user makes a touch gesture for selecting the shortcut folder 153 on the display screen and an instruction to display the contents of the shortcut folder 153 is thus accepted by the input acceptance device 12, the controller 111 allows the display device 121 to display the contents (created shortcuts) stored in the shortcut folder 153.

When the shortcuts stored in the shortcut folder 153 are displayed and the user makes a touch gesture for selecting one of the shortcuts (the folders represented by the shortcuts), an instruction to select the shortcut is thus accepted by the input acceptance device 12. Thus, the controller 111 sets the folder represented by the shortcut as a destination to contain image data read by scanning or as a source to call up print target data. As a result, even in the case of containing image data acquired by scanning into a folder located deep in a data storage hierarchy, so long as a shortcut for the folder is previously created, the folder can be easily called up to store data therein. In addition, the folder can be easily called up to read data from the folder and print it in accordance with a print instruction input to the input acceptance device 12. In the case of Embodiment 2, when the user wants to print out again the file rrr.doc contained in the mm folder 32 located deep in the data storage hierarchy, the mm folder 32 can be easily called up based on the shortcut for the mm folder 32.

As thus far described, a shortcut for a folder where print data has been contained can be easily created, which reduces user's effort. In addition, by creating a shortcut for a folder, the folder can be easily called up. Furthermore, since, upon selection of print data, the controller 111 immediately allows the display device 121 to display a print setting screen, the user does not need to allow a print setting screen to be separately displayed, which reduces user's effort.

For example, the image forming apparatus described in BACKGROUND uses a technique for increasing convenience in using scanned data, but does not adopt any specific method for simplifying an operation for specifying a destination to store the scanned data or a source to call up print data.

Unlike the above, in each of the above embodiments, the operation for specifying a destination to store scanned data or a source to call up print data can be simplified to increase convenience in user's input operation.

## Claims

1. An image forming apparatus (1) comprising:
a storage device (15) that stores a folder where data is contained;
an input acceptance device (12) that accepts an input of an instruction from a user;
an image reading device (13) that reads an image of an original document and acquires image data representing the image;
an image forming device (14) that prints an image on a sheet based on print data; and **characterized by**:
a shortcut creator (112) that creates, according to the input of the instruction accepted by the input acceptance device (12), a shortcut for the folder where the image data acquired by the image reading device (13) is to be contained and a shortcut for the folder where the print data printed by the image forming device (14) is to be contained; and
a controller (111) that allows the image data acquired by the image reading device (13) and the print data printed by the image forming device (14) to be contained in the folder represented by the shortcut in accordance with an instruction to specify the shortcut accepted by the input acceptance device (12).

2. The image forming apparatus (1) according to claim 1, wherein, in accordance with the instruction to specify the shortcut and a print instruction each accepted by the input acceptance device (12), the controller (111) allows the image forming device (14) to print the data contained in the folder represented by the shortcut.

3. The image forming apparatus (1) according to claim 1, wherein the shortcut creator (112) creates a shortcut folder in the storage device (15) and stores the shortcut in the shortcut folder.

4. The image forming apparatus (1) according to claim 3,
further comprising a display device that displays an image,
wherein when an instruction to display a folder is accepted by the input acceptance device (12) and the storage device (15) contains the shortcut folder where the shortcut is stored, the controller (111) allows the display device to display the shortcut folder, and
in accordance with an instruction accepted by the input acceptance device (12), the controller (111) allows the display device to display the folder represented by the shortcut stored in the shortcut folder.

5. The image forming apparatus (1) according to claim 4, wherein, in accordance with an instruction to select the shortcut accepted by the input acceptance device (12), the controller (111) allows data to be stored in the folder represented by the shortcut stored in the shortcut folder or allows data to be read from the folder represented by the shortcut.

6. The image forming apparatus (1) according to claim 1,
further comprising a display device that displays an image,
wherein when the controller (111) allows the display device to display a print data list and the input acceptance device (12) accepts a selection of the print data from among the print data list, the controller (111) allows the display device to display a print setting screen.

## Patentansprüche

1. Bilderzeugungseinrichtung (1), umfassend:
eine Speichervorrichtung (15), welche einen Ordner speichert, in welchem Daten enthalten sind;
eine Eingabeakzeptanzvorrichtung (12), welche eine Eingabe einer Anweisung von einem Benutzer akzeptiert;
eine Bildlesevorrichtung (13), welche ein Bild eines Originaldokuments liest und Bilddaten erfasst, welche das Bild repräsentieren;
eine Bilderzeugungsvorrichtung (14), welche ein Bild basierend auf Druckdaten auf ein Blatt druckt;
und **gekennzeichnet durch**:
einen Verknüpfungsgenerator (112), welcher gemäß der von der Eingabeakzeptanzvorrichtung (12) akzeptierten Eingabe der Anweisung für den Ordner, in welchem die von der Bildlesevorrichtung (13) erfassten Bilddaten enthalten sein sollen, und eine Verknüpfung für den Ordner, in welchem die von der Bilderzeugungsvorrichtung (14) gedruckten Druckdaten enthalten sein sollen, eine Verknüpfung erstellt; und
eine Steuereinheit (111), welche erlaubt, dass die von der Bildlesevorrichtung (13) erfassten Bilddaten und die von der Bilderzeugungsvorrichtung (14) gedruckten Druckdaten in dem durch die Verknüpfung repräsentierten Ordner in Übereinstimmung mit einer Anweisung zur Angabe der von der Eingabeakzeptanzvorrichtung (12) akzeptierten Verknüpfung enthalten sind.

2. Bilderzeugungseinrichtung (1) nach Anspruch 1, wobei die Steuereinheit (111) in Übereinstimmung mit der Anweisung zur Angabe der Verknüpfung und einer Druckanweisung, welche jeweils von der Eingabeakzeptanzvorrichtung (12) akzeptiert werden, der Bilderzeugungsvorrichtung (14) erlaubt, die in dem durch die Verknüpfung repräsentierten Ordner enthaltenen Daten zu drucken.

3. Bilderzeugungseinrichtung (1) nach Anspruch 1, wobei der Verknüpfungsgenerator (112) einen Verknüpfungsordner in der Speichervorrichtung (15) generiert und die Verknüpfung in dem Verknüpfungsordner speichert.

4. Bilderzeugungseinrichtung (1) nach Anspruch 3,
weiter umfassend eine Anzeigevorrichtung, welche ein Bild anzeigt,
wobei, wenn eine Anweisung zum Anzeigen eines Ordners von der Eingabeakzeptanzvorrichtung (12) akzeptiert wird und die Speichervorrichtung (15) den Verknüpfungsordner enthält, in welchem die Verknüpfung gespeichert ist, die Steuereinheit (111) der Anzeigevorrichtung erlaubt, den Verknüpfungsordner anzuzeigen, und
in Übereinstimmung mit einer von der Eingabeakzeptanzvorrichtung (12) akzeptierten Anweisung die Steuereinheit (111) der Anzeigevorrichtung erlaubt, den Ordner anzuzeigen, welcher durch die in dem Verknüpfungsordner gespeicherte Verknüpfung repräsentiert wird.

5. Bilderzeugungseinrichtung (1) nach Anspruch 4, wobei die Steuereinheit (111) in Übereinstimmung mit einer Anweisung zur Auswahl der von der Eingabeakzeptanzvorrichtung (12) akzeptierten Verknüpfung erlaubt, dass Daten in dem Ordner gespeichert werden, welcher durch die in dem Verknüpfungsordner gespeicherte Verknüpfung repräsentiert werden, oder erlaubt, dass Daten aus dem durch die Verknüpfung repräsentierten Ordner gelesen werden.

6. Bilderzeugungseinrichtung (1) nach Anspruch 1,
weiter umfassend eine Anzeigevorrichtung, welche ein Bild anzeigt,
wobei, wenn die Steuereinheit (111) der Anzeigevorrichtung erlaubt, eine Druckdatenliste anzuzeigen und die Eingabeakzeptanzvorrichtung (12) eine Auswahl der Druckdaten aus der Druckdatenliste akzeptiert, die Steuereinheit (111) der Anzeigevorrichtung erlaubt, einen Druckeinstellungsbildschirm anzuzeigen.

## Revendications

1. Appareil de formation d'image (1) comprenant :
un dispositif de stockage (15) qui stocke un dossier où des données sont contenues ;
un dispositif d'acceptation d'entrée (12) qui accepte une entrée d'une instruction d'un utilisateur ;
un dispositif de lecture d'image (13) qui lit une image d'un document original et acquiert des données d'image représentant l'image ;
un dispositif de formation d'image (14) qui imprime une image sur une feuille sur la base de données d'impression ;
et **caractérisé par** :
un créateur de raccourci (112) qui crée, selon l'entrée de l'instruction acceptée par le dispositif d'acceptation d'entrée (12), un raccourci pour le dossier où les données d'image acquises par le dispositif de lecture d'image (13) doivent être contenues et un raccourci pour le dossier où les données d'impression imprimées par le dispositif de formation d'image (14) doivent être contenues ; et
un dispositif de commande (111) qui permet aux données d'image acquises par le dispositif de lecture d'image (13) et aux données d'impression imprimées par le dispositif de formation d'image (14) d'être contenues dans le dossier représenté par le raccourci conformément à une instruction pour spécifier le raccourci accepté par le dispositif d'acceptation d'entrée (12).

2. Appareil de formation d'image (1) selon la revendication 1, dans lequel, conformément à l'instruction pour spécifier le raccourci et une instruction d'impression chacune acceptée par le dispositif d'acceptation d'entrée (12), le dispositif de commande (111) permet au dispositif de formation d'image (14) d'imprimer les données contenues dans le dossier représenté par le raccourci.

3. Appareil de formation d'image (1) selon la revendication 1, dans lequel le créateur de raccourci (112) crée un dossier de raccourcis dans le dispositif de stockage (15) et stocke le raccourci dans le dossier de raccourcis.

4. Appareil de formation d'image (1) selon la revendication 3,
comprenant en outre un dispositif d'affichage qui affiche une image,
dans lequel lorsqu'une instruction pour afficher un dossier est acceptée par le dispositif d'acceptation d'entrée (12) et le dispositif de stockage (15) contient le dossier de raccourcis où le raccourci est stocké, le dispositif de commande (111) permet au dispositif d'affichage d'afficher le dossier de raccourcis, et
conformément à une instruction acceptée par le dispositif d'acceptation d'entrée (12), le dispositif de commande (111) permet au dispositif d'affichage d'afficher le dossier représenté par le raccourci stocké dans le dossier de raccourcis.

5. Appareil de formation d'image (1) selon la revendication 4, dans lequel, conformément à une instruction pour sélectionner le raccourci accepté par le dispositif d'acceptation d'entrée (12), le dispositif de commande (111) permet à des données d'être stockées dans le dossier représenté par le raccourci stocké dans le dossier de raccourcis ou permet à des données d'être lues à partir du dossier représenté par le raccourci.

6. Appareil de formation d'image (1) selon la revendication 1,
comprenant en outre un dispositif d'affichage qui affiche une image,
dans lequel lorsque le dispositif de commande (111) permet au dispositif d'affichage d'afficher une liste de données d'impression et le dispositif d'acceptation d'entrée (12) accepte une sélection des données d'impression parmi la liste de données d'impression, le dispositif de commande (111) permet au dispositif d'affichage d'afficher un écran de réglage d'impression.
